# EUROPÄISCHE PATENTANMELDUNG

(11) **EP 1 607 587 A2**
(43) Veröffentlichungstag der Anmeldung: **21.12.2005**
(21) Anmeldenummer: 05010149.2
(22) Anmeldetag: 10.05.2005
(51) Int. Cl.: F01L 1/08, F01L 1/24

(54) **Nocken zur Beaufschlagung eines Ventiltriebs einer Brennkraftmaschine**

(30) Priorität: 19.06.2004 DE 102004029750
(71) Anmelder: INA-Schaeffler KG, 91074 Herzogenaurach (DE)
(72) Erfinder: Ihlemann, Arndt, 91315 Höchstadt (DE); Sailer, Peter, 91052 Erlangen (DE); Schnell, Oliver, 90587 Veitsbronn (DE); Schmidt, Dieter, 90482 Nürnberg (DE)

(57) **Zusammenfassung**

Nocken zur Beaufschlagung eines Ventiltriebs einer Brennkraftmaschine mit einem Nockengrundkreis (33), einem Hauptnockenbereich (32) und einem zwischen Nockengrundkreis (33) und Hauptnockenbereich ausgebildeten Vornockenbereich (31), der einer auflaufenden Bahn (32a) des Hauptnockenbereiches (32) unmittelbar vorausgeht, wobei der Vornockenbereich (31) eine Profilierung aufweist, einen Anstieg der Nockenhubgeschwindigkeit gefolgt von einem Abfall der Nockenhubgeschwindigkeit gefolgt von einem weiteren Anstieg der Nockenhubgeschwindigkeit bereitstellt.

## Beschreibung

### Gebiet der Erfindung

Die Erfindung betrifft einen Nocken zur Beaufschlagung eines Ventiltriebs nach dem Oberbegriff des Patentanspruchs 1 sowie einen entsprechend ausgebildeten Ventiltrieb. Die Erfindung betrifft ferner eine Ventilanordnung.

Hydraulische Spielausgleichselemente (HVA-Elemente) für Ventiltriebe von Verbrennungskraftmaschinen sind bekannt.

Bei einem klassischen hydraulischen Ventilspielausgleichelement (HVA) wird beispielsweise ein Tassenstößel mittels eines Nockens belastet, wodurch der Abstand zwischen einem Kolben und einem Innengehäuse des Tassenstößels verändert wird. Bei ablaufenden Nocken drückt eine Spielausgleichsfeder den (bei ablaufendem Nocken) entlasteten Kolben nach oben, bis der Stößel am Nocken bzw. am Nockengrundkreis anliegt. Durch die Raumvergrößerung in einem Arbeitsraum unter dem Bolzen strömt Öl aus einem Vorratsraum durch ein Kugelventil in den Arbeitsraum. Bei auflaufendem Nocken wird der Kolben belastet, das Kugelventil schließt und die Ölfüllung im Arbeitsraum wirkt wie eine hydraulisch starre Verbindung. Das Ventil im Innern des Tassenstößels ist typischerweise mit einer Ventilkugel, einer Ventilkugelfeder, einem Ventilsitz, einer Ventilkappe und einer Rückstellfeder vorgesehen, wobei in der klassischen Ausführung die Ventilkugelfeder die Ventilkugel in Richtung des Ventilsitzes belastet. Bei entsprechender Beaufschlagung mittels des Nockens bzw. des Tassenstößels kommt es zu einer Öffnung bzw. Schließung des Ventils.

Es gibt ferner hydraulische Ventilspielausgleichselemente, bei denen die beschriebene Ventilanordnung ein Ventil umfaßt, welches bei dem Auflauf des Nockens zunächst offen ist. Derartige Ventile werden als Freeball - Ventile bezeichnet, da die Ventilkugel im nicht beaufschlagten Zustand frei innerhalb des Hochdruckbereiches beweglich ist. Bei entsprechender Bewegung des Kolbens im Tassenstößel steigt der Druck in dem Hochdruckbereich an, so dass Öl bzw. hydraulische Flüssigkeit an der Ventilkugel vorbei in den Ölvorratsraum fließt. Bei ausreichender Geschwindigkeit der Flüssigkeit kommt es auf Grund von Reibungs- bzw. Dragkräften, die an der Ventilkugel wirken, zu einer Schließung des Ventils, bei der die Ventilkugel an dem Ventilsitz zur Anlage kommt. Hiermit ist eine Fluid-Kommunikation zwischen Hochdruckbereich und Vorratsraum blockiert, womit sich der gewünschte Kraftschluß (hydraulisch starre Verbindung) zur Betätigung eines Motorventils ergibt.

Zur besseren bzw. reproduzierbareren Steuerung einer derartigen Ventilkugel sind ferner sogenannte Reverse-Spring-Ventile bekannt, bei denen zwischen dem Ventilsitz und der Ventilkugel eine Ventilfeder vorgesehen ist, die die Ventilkugel im unbeaufschlagten Zustand von dem Ventilsitz wegdrückt. Auch hier ist das Ventil somit bei einem Ablauf des Nockens zunächst geöffnet. Ein wesentlicher Vorteil bei derartigen Reverse-Spring-Ventilen liegt darin begründet, dass die Funktionsfähigkeit des Ventils bei unterschiedlichen Orientierungen im Raum und verschiedensten Betriebswinkeln gleichmäßig gewährleistet werden kann. Es sei jedoch darauf hingewiesen, dass der Schließvorgang des Ventils (zur schnellen Bereitstellung eines Kraftschlusses zur Beaufschlagung des Motorventils) gegenüber dem Freeball-Ventil langsamer ist, da die von der strömenden hydraulischen Flüssigkeit aufzubringende Reibungskraft auch die Federkraft der zwischen Ventilsitz und Ventilkugel vorgesehenen Feder überwinden muß, bevor sich das Ventil schließt.

Ein derartiges Reverse-Spring-Ventil bzw. ein mit einem derartigen Ventil ausgebildetes hydraulisches Ventilausgleichssystem ist aus der US 5,758,613 bekannt.

Reverse-Spring-und Freeball-Ventile erzeugen gegenüber herkömmlichen Ventilen einen größeren Leerhub. Damit das Motorventil dennoch in akzeptabler Weise öffnet und schließt, muß die Nockenrampenhöhe zur Steigerung der Nockenhubgeschwindigkeit angehoben werden. Bisher wurde diese höhere Nockenrampe als Konstantgeschwindigkeitsrampe ausgeführt. Eine höhere Konstantgeschwindigkeits-Nockenrampe verlängert jedoch das Nockenprofil, wobei auch ein bestimmter Konstantgeschwindigkeitswert nicht überschritten werden kann. Es ergab sich hierdurch ein schleichendes Öffnen und Schließen des Motorventils. Insgesamt erzeugen Reverse-Spring - bzw. Freeball-Ventile gegenüber herkömmlichen hydraulischen Ventilausgleichselementen einen zusätzlichen Leerhub.

### Aufgabe der Erfindung

Der Erfindung liegt die Aufgabe zugrunde, ein hydraulisches Spielausgleichselement (HVA-Element) bereitzustellen, das die Funktionsweise von Reverse-Spring - sowie Freeball-HVAs besser als herkömmliche Lösungen berücksichtigt.

### Zusammenfassung der Erfindung

Erfindungsgemäß wird diese Aufgabe gelöst durch einen Nocken zur Beaufschlagung eines Ventiltriebs mit den Merkmalen des Patentanspruchs 1, einen entsprechenden Ventiltrieb mit den Merkmalen des Patentanspruchs 5 sowie eine Ventilanordnung mit den Merkmalen des Patentanspruchs 9.

Mit der erfindungsgemäßen Ausgestaltung eines Nockens zur Beaufschlagung eines Ventiltriebs können Leerhübe, die herkömmlicherweise bei der Verwendung von Freeball-oder Reverse-Spring-HVAs verstärkt auftraten, in wirksamer Weise vermindert werden. Die Bereitstellung eines derartigen Nockens ist gegenüber der Bereitstellung herkömmlicher Nocken mit keinerlei Mehrkosten verbunden.

Vorteilhafte Ausgestaltungen der Erfindung sind Gegenstand der Unteransprüche.

Vorteilhafterweise weist der Vornockenbereich eine Profilierung mit einem ersten Abschnitt zur Bereitstellung eines progressiven, insbesondere im wesentlichen linearen Aufbaus einer Nockenhubgeschwindigkeit, einem zweiten Abschnitt, der sich an den ersten Abschnitt anschließt, zur Bereitstellung einer Zurücknahme der Nockenhubgeschwindigkeit, einem dritten Abschnitt, der sich an den zweiten Abschnitt anschließt, zur Bereitstellung einer im wesentlichen konstanten Nockenhubgeschwindigkeit, und einem vierten Abschnitt, der sich an den dritten Abschnitt anschließt, zur Bereitstellung eines weiteren Aufbaus der Nockenhubgeschwindigkeit auf. Hierbei stellt der vierte Abschnitt den Übergang zum Hauptnockenbereich dar, mittels dessen ein Motorventil beaufschlagbar ist. Die Ventilkugel kommt erfindungsgemäß während des dritten Abschnitts auf dem Ventilsitz zur Anlage, wodurch das HVA-Ventil geschlossen wird. Erfindungsgemäß ist durch einen sehr schnellen Anstieg der Nockenhubgeschwindigkeit während des ersten Abschnitts ein Zurückfahren bzw. Konstanthalten der Nockenhubgeschwindigkeit in dem zweiten und dritten Abschnitt möglich, wodurch insgesamt die Beaufschlagungszeiten eines Motorventils gegenüber herkömmlichen Lösungen verbessert werden können.

Zweckmäßigerweise definiert die in dem dritten Abschnitt des Vornockenbereichs erreichte Nockenhubgeschwindigkeit einen für eine Motorventilöffnung akzeptablen Wert.

Es erweist sich ebenfalls als günstig, dass der zweite Abschnitt des Vornockenbereiches im wesentlichen eine lineare Rücknahme der Nockenhubgeschwindigkeit umfasst. Eine derartige lineare Rücknahme ist konstruktiv auf relativ einfache Weise bewerkstelligbar.

Es ist bevorzugt, dass sich die Profilierung des Vornockenbereiches in einem sich über einen Winkelbereich α erstreckenden Nockenbereich vorgesehen ist, wobei α von 0,1° bis 40° betragen kann.

Es ist besonders bevorzugt, einen erfindungsgemäßen Ventiltrieb mit einem als Reverse-Spring-Ventil oder Freeball-Ventil ausgebildeten HVA-Ventil auszubilden. Die erfindungsgemäß zur Verfügung gestellte Nockenprofilierung ist insbesondere bei derartigen Ventilen in der Lage, Beaufschlagungszeiten eines Motorventils, welche durch Ventilspiel am HVA-Ventil verursacht sind, zu reduzieren.

Eine erfindungsgemäße Ventilanordnung mit einem Einlassventil und einem Auslassventil, bei der Reverse-Spring-Ventile oder Freeball-Ventile nur einlassseitig verbaut sind, tragen zu einer Drehmoment- und Leistungssteigerung bei hohen Drehzahlen bei. Erfindungsgemäß kann bei hohen Drehzahlen ein geringer Leerhub realisiert werden. Hierbei bleibt jedoch eine Leerlaufqualität erhalten, da bei einer Leerlaufdrehzahl ein relativ großer Leerhub entsteht.

Das Vorsehen von Reverse-Spring-Ventilen oder Freeball-Elementen lediglich auf der Auslassseite trägt zu einer wirksamen Emissionsreduzierung eines Verbrennungsmotors bei.

Das Vorsehen derartiger Reverse-Spring-Ventile oder Freeball-Ventile sowohl einlassseitig als auch auslassseitig trägt sowohl zur Drehmoment- und Leistungssteigerung als auch zur Emissionsreduzierung bei. Hierbei kann gegenüber herkömmlichen HVA-Elementen eine gleich gute Leerlaufqualität gewährleistet werden.

Insgesamt ist hierzu festzustellen, dass sich der Leerhub des Reverse-Spring-Ventils oder des Freeball-Ventils in Abhängigkeit von einer Motordrehzahl ändert, so dass bei einem Leerlauf relativ viel Leerhub erzeugt wird und bei hohen Drehzahlen relativ wenig. Dieses Verhalten ist durchaus gewünscht, und kann bei der Konstruktion bzw. Berechnung von Überschneidungsflächen von Einlassventilen und Auslassventilen in vorteilhafter Weise berücksichtigt werden.

### Kurze Beschreibung der Zeichnungen

Die Erfindung wird nun anhand der beigefügten Zeichnung weiter erläutert. In dieser zeigt
Figur 1 in schematischer seitlicher Schnittansicht eine als Reverse-Spring-Ventil ausgebildete HVA-Ventilfeder-anordnung, bei der die Erfindung in besonders vorteilhafter Weise einsetzbar ist,
Figur 2 eine bevorzugte Ausführungsform eines erfindungsgemäß zur Beaufschlagung eines Ventiltriebs vorgesehenen Nockens, und
Figur 3 die Hubgeschwindigkeit eines von einem Nocken gemäß Figur 2 beaufschlagten Stößels bei konstanter Winkelgeschwindigkeit aufgetragen über den Nockenwellenwinkel.

### Ausführliche Beschreibung der Zeichnungen

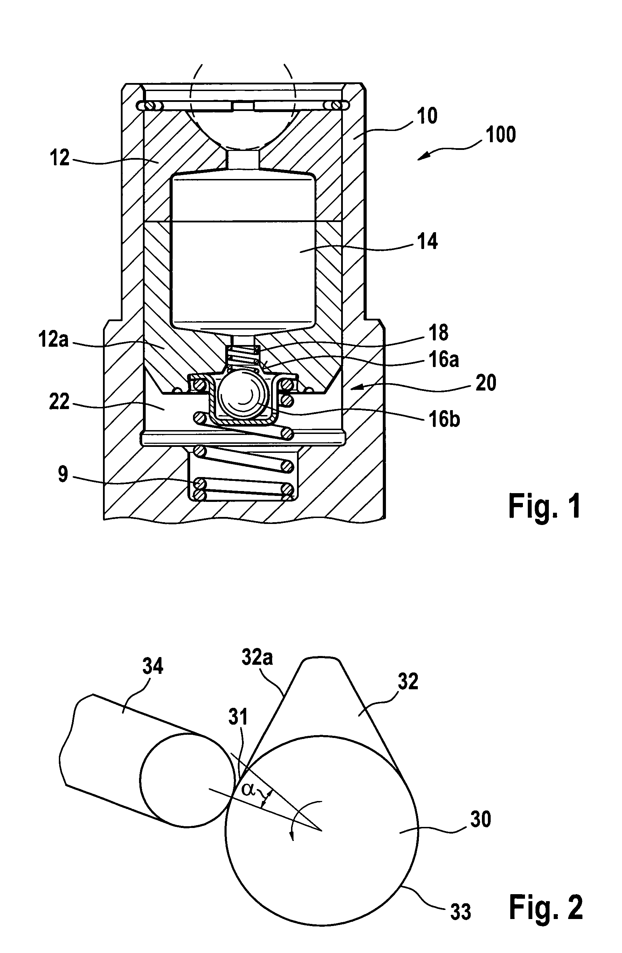

Figur 1 zeigt einen Bereich 100 eines Ventiltriebs einer Verbrennungskraftmaschine, wobei der Ventiltrieb mittels eines (in dieser Ansicht nicht dargestellten) Nockens einer Nockenwelle der Verbrennungskraftmaschine beaufschlagt wird. Der Ventiltrieb betätigt ein in dieser Ansicht ebenfalls nicht gezeigtes Gaswechselventil bzw. Motorventil.

Der dargestellte Bereich 100 des Ventiltriebs weist ein Kolbengehäuse 10 auf, in dem ein Druckkolben 12 verschiebbar gelagert ist. Im Innern des Kolbens 12 ist ein Hohlraum 14 ausgebildet, in den unter Motoröldruck stehendes Öl einbringbar ist.

Der Kolben 12 weist in seiner Unterseite 12a einen als Ventilsitz 16a geformten Bereich auf, der von einer Ventilkugel 16b beaufschlagbar ist. Die Ventilkugel 16b und der Ventilsitz 16a sind, zusammen mit einer Ventilfeder 18, welche als Reverse-Spring-Ventilfeder ausgebildet ist, und einer Rückstellfeder 9 Teil eines HVA-Ventils, welches insgesamt mit 20 bezeichnet ist.

Mittels der HVA-Ventilfeder 18 wird die Ventilkugel 16b im unbelasteten Zustand beabstandet von dem Ventilsitz 16a gehalten.

Über das HVA-Ventil 20 steht der Hohlraum 14 mit einem Hochdruckraum 22, in den Öl unter Hochdruck einbringbar ist, in fluider Kommunikation.

Wenn sich der Kolben 12 auf Grund einer Beaufschlagung durch den (nicht dargestellten) Nocken nach unten bewegt, wird das Volumen des Hochdruckraums 22 verkleinert, wodurch es zu einem Ölfluss aus dem Hochdruckraum 22 in den Hohlraum 14 kommt. Hierbei ist, wie bereits erwähnt, das HVA- Ventil zunächst offen, da die Ventilkugel 16b einen Abstand zu dem Ventilsitz 16a aufweist.

Durch diesen Ölfluss entsteht eine Reibungskraft an der Ventilkugel 16b, die diese in Richtung des Ventilsitzes 16a belastet. Wenn die Reibungskraft die Federkraft der HVA-Ventilfeder sowie gegebenenfalls die Gewichtskraft der Ventilkugel 16b übersteigt, bewegt sich die Ventilkugel auf den Ventilsitz 16a zu und erreicht die geschlossene Position, in der sie an dem Ventilsitz 16a anliegt. Bei Erreichen der geschlossenen Position des HVA-Ventils 20 wird ein Kraftschluß im Ventiltrieb hergestellt, der zur Beaufschlagung des (nicht dargestellten) Motorventils führt.

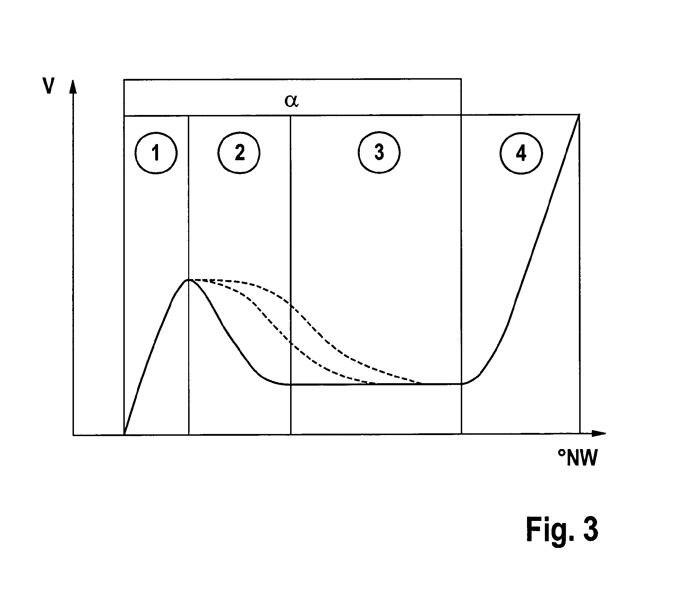

Eine erfindungsgemäße Nockengestaltung, welche zu einer besonders günstigen Hubbewegung bzw. Hubgeschwindigkeit des Nockens bzw. des Druckkolbens 12 führt, wird nun unter Bezugnahme auf die Figuren 2 und 3 näher erläutert.

Ein an einer (auch in Figur 2 nicht dargestellten) Nockenwelle vorgesehener Nocken ist in Figur 2 mit 30 bezeichnet. Die Form des Nockens 30 ist durch einen relativ spitz verlaufenden Hauptnockenbereich 32 sowie den Nockengrundkreis 33 charakterisiert. Wesentlich im Rahmen der vorliegenden Erfindung ist der in Figur 2 eingezeichnete Vornockenbereich 31, dessen Erstreckung durch einen Winkel α dargestellt ist. Der Vornockenbereich 31 ist zwischen dem Grundkreis 33 und dem Hauptnockenbereich 32 unmittelbar vor der Nockenauflaufbahn 32a des Hauptnockenbereichs 32 ausgebildet. Durch Beaufschlagung eines Stößels 34, entsteht eine Hubbewegung, welche in an sich bekannter Weise auf einen Kolben 12, wie er in Figur 1 dargestellt ist, übertragbar ist. In an sich bekannter Weise kann Stößel 34 als Tassenstößel, Schlepphebel, Kipphebel oder Rollenstößel ausgebildet sein. Die zeitliche Ableitung des Stößelhubes wird als Stößelhubgeschwindigkeit bezeichnet, welche der Hubgeschwindigkeit des Kolbens 12 entspricht.

Erfindungsgemäß wird nun die Nockenrampe des Nockens 30 im Vornockenbereich 31 derart gestaltet, dass sich unterschiedliche charakteristische Nockenhubgeschwindigkeitsabschnitte ergeben. Diese Abschnitte werden nun unter Bezugnahme auf Figur 3 näher erläutert.

Zunächst erfolgt in einem ersten Abschnitt 1, der sich an den Nockengrundkreis anschließt ein progressiver Hubgeschwindigkeitsaufbau, der eine Bewegung der Ventilkugel 16a initiiert, d.h. die kritische Geschwindigkeit des verwendeten Hydrauliköls wird mit diesem sehr steil ausgebildeten Abschnitt einer Progressivrampe deutlich früher als bei herkömmlichen Systemen erreicht. Es folgt ein Abschnitt 2, der ein Zurücknehmen der Hubgeschwindigkeit auf ein für das Öffnen des Motorventils akzeptablen Wert umfaßt. Während dieser Phase ist die Ventilkugel 16a in Bewegung und erzeugt einen weiteren Leerhub.

Im hierauf folgenden Konstantgeschwindigkeitsrampenabschnitt 3 trifft die Ventilkugel 16a auf den Ventilsitz 16b, das HVA-Ventil schließt. Hiermit ist der Kraftschluß im Ventiltrieb hergestellt. Die Länge der Konstantgeschwindigkeitsrampe bei 3 ist so ausgeführt, dass mechanische und hydraulische Nachgiebigkeiten im Ventiltrieb berücksichtigt werden.

Anschließend öffnet in einem Abschnitt 4 das Motorventil, d.h. nach dem das HVA-Ventil geschlossen und der Ventiltrieb vorgespannt ist.

An den Abschnitt 4 schließt der vorliegend nicht dargestellt Hauptnockenbereich an, der durch den Nockenabschnitt 32 des Nockens 30 definiert ist.

## Patentansprüche

1. Nocken zur Beaufschlagung eines Ventiltriebs einer Brennkraftmaschine mit einem Nockengrundkreis (33), einem Hauptnockenbereich (32) und einem zwischen Nockengrundkreis (33) und Hauptnockenbereich (32) ausgebildeten Vornockenbereich (31), der einer auflaufenden Bahn (32a) des Hauptnockenbereiches (32) unmittelbar vorausgeht, **dadurch gekennzeichnet, dass** der Vornockenbereich (31) eine Profilierung aufweist, die einen Anstieg der Nockenhubgeschwindigkeit gefolgt von einem Abfall der Nockenhubgeschwindigkeit gefolgt von einem weiteren Anstieg der Nockenhubgeschwindigkeit bereitstellt.

2. Nocken nach Anspruch 1, **dadurch gekennzeichnet, dass** der Vornockenbereich (31) eine Profilierung mit einem ersten Abschnitt (1) zur Bereitstellung eines progressiven, insbesondere im wesentlichen linearen Aufbaus einer Nockenhubgeschwindigkeit, einem zweiten Abschnitt (2), der sich an den ersten Abschnitt (1) anschließt, zur Bereitstellung einer Zurücknahme der Nockenhubgeschwindigkeit, einem dritten Abschnitt (3), der sich an den zweiten Abschnitt (2) anschließt, zur Bereitstellung einer im wesentlichen konstanten Nockenhubgeschwindigkeit, und einem vierten Abschnitt (4), der sich an den dritten Abschnitt (3) anschließt, zur Bereitstellung eines weiteren Aufbaus der Nockengeschwindigkeit, aufweist.

3. Nocken nach Anspruch 1 oder 2, **dadurch gekennzeichnet, daß** die in dem dritten Abschnitt (3) des Vornockenbereichs (31) erreichte Nockenhubgeschwindigkeit einen für eine Motorventilöffnung akzeptablen Wert definiert.

4. Nocken nach einem der Ansprüche 1 bis 3, **dadurch gekennzeichnet, daß** der zweite Abschnitt (2) des Vornockenbereichs (31) im wesentlichen eine lineare Rücknahme der Nockenhubgeschwindigkeit umfaßt.

5. Nocken nach einem der vorstehenden Ansprüche, **dadurch gekennzeichnet, dass** die Profilierung des Vornockenbereiches (31) in einem sich über einen Winkelbereich α erstreckenden Nockenbereich vorgesehen ist, wobei α 0,1° bis 40° beträgt.

6. Ventiltrieb zur Beaufschlagung eines Motorventils, **gekennzeichnet durch** einen Nocken nach einem der vorstehenden Ansprüche.

7. Ventiltrieb nach Anspruch 6, **gekennzeichnet durch** ein als Reverse-Spring-Ventil ausgebildetes HVA-Ventil.

8. Ventiltrieb nach Anspruch 7, **gekennzeichnet durch** ein als Freeball-Ventil ausgebildetes HVA-Ventil.

9. Ventilanordnung für einen Verbrennungsmotor mit einem Einlassventil und einem Auslassventil, **dadurch gekennzeichnet, dass** das Einlassventil und/oder das Auslassventil mittels eines Ventiltriebes nach einem der vorstehenden Ansprüche 6 bis 8 beaufschlagbar ist.
